# EUROPÄISCHE PATENTSCHRIFT

(11) **EP 2 982 024 B1**
(45) Veröffentlichungstag und Bekanntmachung des Hinweises auf die Patenterteilung: **22.07.2020**
(21) Anmeldenummer: 14721817.6
(22) Anmeldetag: 30.04.2014
(51) Int. Cl.: H02K 5/18, H02K 5/22, H02K 9/14

(54) **GEHÄUSE FÜR EINE ELEKTRISCHE MASCHINE**
HOUSING FOR AN ELECTRICAL MACHINE
BOÎTIER POUR UNE MACHINE ÉLECTRIQUE

(30) Priorität: 13.05.2013 EP 13167443
(43) Veröffentlichungstag der Anmeldung: 10.02.2016
(73) Patentinhaber: Siemens Aktiengesellschaft, 80333 München (DE)
(72) Erfinder: KOCH, Thomas, 90459 Nürnberg (DE); GRILLENBERGER, Reiner, 91575 Windsbach (DE)
(86) Internationale Anmeldenummer: PCT/EP2014/058791
(87) Internationale Veröffentlichungsnummer: WO 2014/183997

(56) Entgegenhaltungen:
- JP-A- S5 932 334
- JP-A- 2001 178 079
- US-A- 4 908 538

## Beschreibung

Die vorliegende Erfindung betrifft ein Gehäuse für eine elektrische Maschine. Überdies betrifft die vorliegende Erfindung eine elektrische Maschine.

Elektrische Maschinen sind heutzutage in vielen unterschiedlichen Ausführungsformen auf dem Markt erhältlich. Dabei bilden jedoch eigen- oder fremdbelüftete elektrische Maschinen, die in der Regel mit einem klassischen Rippengehäuse ausgeführt sind, den größten Anteil. Diese Gehäuseformen haben sich in der Vergangenheit sehr gut bewährt, entsprechend jedoch heutzutage nicht mehr den aktuellen Anforderungen, da viele Probleme nicht mehr einfach gelöst bzw. neue Anforderungen nicht einfach umgesetzt werden können.

Beispielsweise sind elektrische Maschinen bekannt, die ein Rippengehäuse aufweisen, das aus Grauguss gefertigt ist, und das mit einem Fremdlüfteraggregat gekühlt werden kann. Dabei sind die Rücklaufkanäle im Gehäuse integriert. Zusätzlich stellt das Gehäuse Anbauflächen für die Klemmkästen bzw. die Hilfsklemmkästen bereit. Dabei kann das Fremdlüfteraggregat üblicherweise nur axial angebracht werden. Weiterhin müssen die Ständerleitungen im Rücklaufkanal verlegt werden, wodurch dieser nicht voll funktionsfähig ist. Zudem sind die Rücklaufkanäle nicht berippt und werden dadurch nicht optimal gekühlt. Dadurch kann die Wärme vom Innenkühlkreis nicht effizient abgeführt werden. Des Weiteren besteht die Gefahr, dass die angeströmte Außenluft über die Länge des Gehäuses abreißen kann. Zusätzlich ist die Anordnung der Klemmkästen nur an vorbestimmten Positionen möglich. Zusätzliche Anbauflächen für Monitoringgeräte sind nicht bereitgestellt.

Des Weiteren sind Motorkonzepte bekannt, bei denen auf der Antriebsseite und der Nichtantriebsseite Topflagerschilde verwendet werden. Bei derartigen elektrischen Maschinen ist kein einfaches Reinigungskonzept möglich, da die Kühlluft durch das Blechpaket geführt wird. Des Weiteren eignen sich derartige Motoren aus Stabilitätsgründen nicht für große Achshöhen. Diese elektrischen Maschinen sind für den Fremdlüfterbetrieb optimiert und bieten so den Vorteil der flexiblen Klemmkastenanordnung.

Zudem werden elektrische Maschinen angeboten, die ebenfalls ein Rippengehäuse aufweisen, das beispielsweise aus Aluminium oder Grauguss gefertigt ist. Derartige elektrische Maschinen sind für die Eigenbelüftung optimiert, weisen aber keinen Innenkühlkreislauf auf. Des Weiteren ist die Anordnung der Klemmkästen eingeschränkt und die für die Anordnung der Klemmkästen vorgesehenen Klemmkastensockel behindern hierbei den axialen Kühlmittelstrom.

Überdies sind Gehäuse für elektrische Maschinen bekannt, die als Rippengehäuse aus Grauguss gebildet sind, wobei zur Kühlung aufwendig gestaltete Rücklaufkanäle bzw. Schächte im Gehäuse integriert sind.

In diesem Zusammenhang beschreibt die DE 1 613 307 A1 eine elektromagnetische Rotationsmaschine, insbesondere einen Elektromotor oder Generator. Dabei kann das Gehäuse der Rotationsmaschine vier Querverstrebungen aufweisen, die an einem kranzförmigen Teil des Gehäuses über die ganze Länge des Ständerblechpakets geschweißt sind. Diese Querverstrebungen, die im Wesentlichen die Form eines Winkeleisens aufweisen, dienen der Führung eines Kühlmittelstroms.

Des Weiteren beschreibt die DE 85 02 977 U1 ein Ständergehäuse für eine elektrische Maschine. Das Ständergehäuse umfasst vier Rippensegmente, wobei die Rippensegmente unterschiedlich lange Kühlrippen aufweisen, so dass sich ein im Wesentlichen quaderförmiges Gehäuse ergibt.

Zudem beschreibt die DE 10 2007 034 914 A1 einen Umrichtermotor und ein Verfahren zur Kühlung eines Umrichtermotors. Dabei ist in einem ersten rohrförmigen Gehäuseteil ein Stator angeordnet und ein zweiter rohrförmiger Gehäuseteil umgibt den ersten rohrförmigen Gehäuseteil. Somit ist zwischen den Gehäuseteilen ein ringförmiger Strömungskanal für Kühlluft oder für ein Kühlmittel ausgebildet. Ein Lüfter zur Förderung von Kühlluft kann beispielsweise an der Nichtantriebsseite des Umrichtermotors angeordnet sein.

Darüber hinaus beschreibt die DE 10 2008 028 658 A1 einen Elektromotor mit Geber. Der Elektromotor weist ein Gehäuse auf, das Kühlrippen umfasst. Der Geber ist dabei in einem Gebergehäuse angeordnet. Das Gebergehäuse ist an einer ein Lüfterrad gehäusebildend umgebenden Lüfterhaube des Elektromotors befestigt. Bei laufendem Lüfterrad strömt ein Luftstrom in axialer Richtung ungehindert an dem gehäusebildenden Teil vorbei oder durch das gehäusebildende Teil hindurch.

In der DE 98 00 917 U1 ist ein Elektromotor beschrieben, dessen Gehäuse Luftleitrippen aufweist. Mittels der Luftleitrippen lässt sich der Anteil der von dem Radiallüfter gelieferten Luftmenge, welcher die Kanäle des Statorblechpakets durchströmt, wesentlich erhöhen. Dabei sind die durch die Luftleitrippen gebildeten Kanäle auf die Kanäle in den Eckbereichen des Statorblechpakets ausgerichtet.

Aus der US 6,522,036 B1 ist eine elektrische Maschine bekannt, bei der der Stator in einem hohlen blockförmigen Körper angeordnet ist, der in den Eckbereichen entsprechende Kühlrippen aufweist.

Zudem beschreibt die WO 2007/002216 A1 eine elektrische Maschine, deren Gehäuse eine Mehrzahl von Kühlrippen aufweist. An der Nichtantriebsseite der elektrischen Maschine ist ein Lüfter angeordnet, der von einer Kappe umgeben ist. Durch die Kappe wird der von dem Lüfter erzeugte Luftstrom zu den Kühlrippen geleitet.

In der US 4,908,538 A ist eine elektrische Maschine beschrieben, die mit einem internen Lüftungssystem und einem externen Lüftungssystem gekühlt wird. Das interne Lüftungssystem umfasst einen Lüfter, der von dem Rotor angetrieben wird und mit dem Kühlluft durch Kanäle geführt wird.

In der JP 2001 238395 A ist eine elektrische Maschine beschrieben, die ein Gehäuse für den Stator aufweist. An der Außenseite des Gehäuses ist eine Kühlrippe vorgesehen, an der eine Abdeckung angeordnet ist.

Zudem beschreibt die JP S59 32334 A eine elektrische Maschine, an deren Gehäuse eine Mehrzahl von Kühlrippen angeordnet sind. In einem Bereich weisen die Kühlrippen einen weiteren Abstand zueinander auf. In diesem Bereich kann ein Klemmkasten angeordnet werden.

Es ist Aufgabe der vorliegenden Erfindung, eine effektivere Kühlung für eine elektrische Maschine bereitzustellen.

Diese Aufgabe wird durch ein Gehäuse mit den Merkmalen des Patentanspruchs 1 und durch eine elektrische Maschine mit den Merkmalen des Patentanspruchs 7 gelöst. Vorteilhafte Weiterbildungen der vorliegenden Erfindung sind Gegenstand der Unteransprüche.

Das erfindungsgemäße Gehäuse für eine elektrische Maschine umfasst einen Kühlbereich, in dem eine Mehrzahl von Kühlrippen zum Führen eines Kühlmittelstroms an einer Außenfläche einer Gehäusewand angeordnet sind, einen Kühlmittelzuführbereich, der sich an einer ersten Seite des Kühlbereichs an den Kühlbereich anschließt und der zumindest einen Kanal zum Zuführen des Kühlmittelstroms zu den Kühlrippen des Kühlmittelbereichs aufweist und einen Kühlmittelabfuhrbereich, der sich an einer der ersten Seite gegenüberliegenden, zweiten Seite des Kühlbereichs an den Kühlbereich anschließt und der zumindest einen Kanal zum Abführen des Kühlmittelstroms von den Kühlrippen des Kühlbereichs aufweist. In dem Innenraum des Gehäuses ist zumindest eine Aussparung zum Führen eines Kühlmittelstroms im Inneren des Gehäuses angeordnet, wobei sich die zumindest eine Aussparung entlang einer axialen Richtung des Gehäuses erstreckt. Die zumindest eine Aussparung ist in die Gehäusewand eingebracht und dient zum Führen eines Innenkühlkreislaufs. Ferner weist das Gehäuse im Kühlmittelzufuhrbereich einen rechteckigen Querschnitt auf, wobei in dem Innenraum des Gehäuses im Kühlmittelzufuhrbereich in den Ecken jeweils ein Kanal zum Zuführen des Kühlmittelstroms angeordnet ist, wobei der jeweilige Kanal den Kühlmittelstrom zu den Kühlrippen in dem Kühlbereich des Gehäuses führt. Zudem weist das Gehäuse im Kühlmittelabfuhrbereich einen rechteckigen Querschnitt aufweist, wobei in dem Innenraum des Gehäuses im Kühlmittelabfuhrbereich in den Ecken jeweils ein Kanal zum Abführen des Kühlmittelstroms angeordnet ist. Des Weiteren weist der rechteckige Querschnitt in dem Kühlmittelzufuhrbereich und in dem Kühlmittelabfuhrbereich die gleichen Außenmaße auf wie das Gehäuse in dem Kühlbereich.

Das Gehäuse für eine elektrische Maschine kann beispielsweise aus Grauguss oder aus Stahl gefertigt sein. Das Gehäuse kann eine im Wesentlichen quaderförmige Außenfläche aufweisen. Das Gehäuse weist drei unterschiedliche Bereiche auf. In dem mittleren Bereich bzw. dem Kühlbereich sind an einer Gehäusewand, die beispielsweise im Wesentlichen hohlzylinderförmig ausgebildet sein kann, eine Mehrzahl von Kühlrippen angeordnet, die sich entlang einer axialen Richtung der Gehäusewand erstrecken können. Dabei können die Kühlrippen so ausgebildet sein, dass sie an einem Randbereich der Gehäusewand eine größere Erstreckung senkrecht zur axialen Richtung aufweisen als in einem mittleren Bereich. Mit anderen Worten begrenzen die Kühlrippen eine quaderförmige Außenfläche in dem Kühlbereich des Gehäuses.

Ein Kühlmittel kann beispielsweise von einem Eigenlüfter oder einem Fremdlüfter bereitgestellt werden. Der jeweilige Kanal führt den Kühlmittelstrom zu den Kühlrippen im Kühlbereich des Gehäuses. Durch den zumindest einen Kanal im Kühlmittelzufuhrbereich, der beispielsweise als Düse ausgebildet sein kann, kann ein gerichteter Kühlmittelstrom zu den Kühlrippen im Kühlbereich geführt werden. Durch die zusätzliche Abführung des Kühlmittelstroms durch den zumindest einen Kanal im Kühlmittelabfuhrbereich, der beispielsweise als Düse ausgebildet sein kann, kann erreicht werden, dass der Kühlmittelstrom im Bereich der Kühlrippen nicht abreißt bzw. dass sich der Kühlmittelstrom nicht ablöst. Somit kann eine von der elektrischen Maschine erzeugte Wärme durch die Kühlrippen im Kühlbereich besonders effektiv abgeführt werden.

Zudem weist das Gehäuse im Kühlmittelzuführbereich einen rechteckigen Querschnitt auf, wobei in dem Innenraum des Gehäuses im Kühlmittelzufuhrbereich in den Ecken jeweils ein Kanal zum Zuführen des Kühlmittelstroms angeordnet ist. Zusätzlich weist das Gehäuse im Kühlmittelabfuhrbereich einen rechteckigen Querschnitt aufweisen, wobei in dem Innenraum des Gehäuses im Kühlmittelabfuhrbereich in den Ecken jeweils ein Kanal zum Abführen des Kühlmittelstroms angeordnet ist. Das Gehäuse weist im Kühlmittelzufuhrbereich und im Kühlmittelabfuhrbereich bevorzugt keine Kühlrippen auf. Dadurch, dass das Gehäuse im Kühlmittelzufuhrbereich und im Kühlmittelabfuhrbereich einen rechteckigen Querschnitt aufweist, der die gleichen Außenmaße aufweist wie das Gehäuses im Kühlbereich, kann eine besonders effektive Kühlmittelzufuhr und -abfuhr zu den Kühlrippen erfolgen. Zudem wird durch das quaderförmige Design des Gehäuses die Kühloberfläche deutlich vergrößert, wodurch die Verlustwärme besser abgeführt werden kann. Zudem eignet sich das Gehäuse sowohl für die Verwendung von Eigenlüftern als auch für die Verwendung von Fremdlüftern.

Ferner ist in dem Innenraum des Gehäuses zumindest eine Aussparung zum Führen eines Kühlmittelstroms im Inneren des Gehäuses angeordnet. In dem Inneren des Gehäuses sind entsprechende Vertiefungen bzw. Aussparungen in die Gehäusewand eingebracht, die zum Führen eines Innenkühlkreislaufes dienen. Dabei können beispielsweise vier separate Aussparungen in die Gehäusewand eingebracht sein, die sich im Wesentlichen entlang der axialen Richtung des Gehäuses erstrecken. Die vier Aussparungen können jeweils den Bereichen der Ecken des quaderförmigen Gehäuses zugeordnet sein. Somit kann eine Luftführung für einen Innenkühlkreislauf bereitgestellt werden.

Bevorzugt sind die Kühlrippen in dem Kühlbereich entlang eines kompletten Umfangs der Außenfläche der Gehäusewand angeordnet. Dadurch, dass die Kühlrippen um den kompletten Umfang der Gehäusewand verteilt sind, kann eine effektive Kühlung ermöglicht werden. Dabei sind die Kühlrippen auch auf den Bereichen der Gehäusewand angeordnet, die den Aussparungen zum Führen eines Kühlmittels im Inneren des Gehäuses gegenüberliegen. Somit kann auch die im Innenkühlkreislauf erzeugte Wärme besonders effektiv nach außen abgeführt werden.

In einer weiteren Ausgestaltung weist das Gehäuse im Kühlmittelabfuhrbereich zumindest eine Durchgangsöffnung auf. Durch die zumindest eine Öffnung kann eine Durchführung für elektrische Leitungen, insbesondere zur Kontaktierung des Ständers der elektrischen Maschine, bereitgestellt werden.

In einer weiteren Ausführungsform weist das Gehäuse im Kühlmittelabfuhrbereich zumindest eine Befestigungsfläche auf. Diese Befestigungsfläche kann dem Bereich der Durchgangsöffnung zugeordnet sein. Die Durchgangsöffnung kann auch innerhalb der Befestigungsfläche angeordnet sein. Die Befestigungsfläche kann als Klemmkastensockel zur Befestigung eines Klemmkastens dienen. Dabei kann auch auf jeder Seite des quaderförmigen Gehäuses eine Befestigungsfläche vorgesehen sein. Somit kann je nach Anwendungsfall ein oder mehrere Klemmkästen, Hilfsklemmkästen oder auch Monitoringgeräte an der jeweiligen Befestigungsfläche angebracht werden.

Bevorzugt ist in einem der Befestigungsflächen im Kühlmittelabfuhrbereich zugeordneten Bereich im Kühlbereich ein Kühlmittelablenkelement angeordnet. Mit anderen Worten ist im Kühlbereich des Gehäuses, der an den Kühlmittelabfuhrbereich des Gehäuses grenzt, ein entsprechendes Kühlmittelablenkelement angeordnet, das den Kühlmittelstrom, der entlang der Kühlrippen geführt wird, im Bereich der Befestigungsfläche im Kühlmittelabfuhrbereich ablenken. Dadurch kann erreicht werden, dass der Kühlmittelstrom nicht durch die Befestigungsfläche beeinflusst wird.

In einer weiteren Ausgestaltung ist auf einer der Gehäusewand gegenüberliegende Seite der Kühlrippen auf den Kühlrippen zumindest ein Luftleitblech angeordnet. Zur Verbesserung der Luftführung bzw. des Kühlmittelstroms mittels der Kühlrippen können zusätzlich auf die Außenflächen des Gehäuses im Kühlbereich ein oder mehrere Bleche angeordnet sein.

Die erfindungsgemäße elektrische Maschine umfasst das erfindungsgemäße Gehäuse, wobei der Kühlmittelzufuhrbereich des Gehäuses einer Nichtantriebsseite der elektrischen Maschine und der Kühlmittelabfuhrbereich des Gehäuses einer Antriebsseite der elektrischen Maschine zugeordnet sind.

Bevorzugt umfasst die elektrische Maschine einen Lüfter, der an dem Gehäuse an einer dem Kühlbereich gegenüberliegenden Seite des Kühlmittelzufuhrbereichs angeordnet ist. Der Lüfter, der beispielsweise als Eigenlüfter oder als Fremdlüfter ausgebildet sein kann, kann an der Nichtantriebsseite der elektrischen Maschine angeordnet sein. Dabei kann ein Lüfter zum Bereitstellen eines äußeren Kühlmittelstroms, der entlang der Kühlrippen geleitet wird, und zum Bereitstellen eines inneren Kühlmittelstroms im Inneren des Gehäuses verwendet werden. Alternativ dazu kann ein erster Lüfter für den äußeren Kühlmittelstrom und ein zweiter Lüfter für den inneren Kühlmittelstrom bereitgestellt werden. Damit kann eine besonders effiziente Kühlung der elektrischen Maschine erreicht werden.

Die zuvor in Zusammenhang mit dem erfindungsgemäßen Gehäuse beschriebenen Vorteile und Weiterbildungen können auf die erfindungsgemäße elektrische Maschine übertragen werden.

Die vorliegende Erfindung wird nun anhand der beigefügten Zeichnungen näher erläutert. Dabei zeigen:
FIG 1 ein Gehäuse für eine elektrische Maschine in einer Perspektivdarstellung;
FIG 2 ein Gehäuse gemäß FIG 1 in einer weiteren Ausführungsform;
FIG 3 das Gehäuse gemäß FIG 2 in einer abgewickelten Darstellung;
FIG 4 das Gehäuse gemäß FIG 1 in einer geschnittenen Seitenansicht;
FIG 5 eine elektrische Maschine mit einem Gehäuse in einer Perspektivansicht; das Gehäuse ist ein Beispiel, welches das Verständnis der Erfindung erleichtert ("Beispiel" im Folgenden)
FIG 6 die elektrische Maschine gemäß FIG 5 (ein weiteres Beispiel) in einer weiteren Perspektivansicht;
FIG 7 eine Perspektivdarstellung der elektrischen Maschine als weiteres Beispiel, mit einer Detailansicht von Kühlrippen in einem Kühlbereich und einem Kühlmittelablenkelement;
FIG 8 als weiteres Beispiel eine Rückansicht der elektrischen Maschine;
FIG 9 als weiteres Beispiel eine Perspektivansicht der elektrischen Maschine mit einer Detailansicht von Kanälen zum Abführen eines Kühlmittelstroms; und
FIG 10 als weiteres Beispiel eine Seitenansicht der elektrischen Maschine.

Die nachfolgend näher geschilderten Ausführungsbeispiele stellen bevorzugte Ausführungsbeispiele der vorliegenden Erfindung dar.

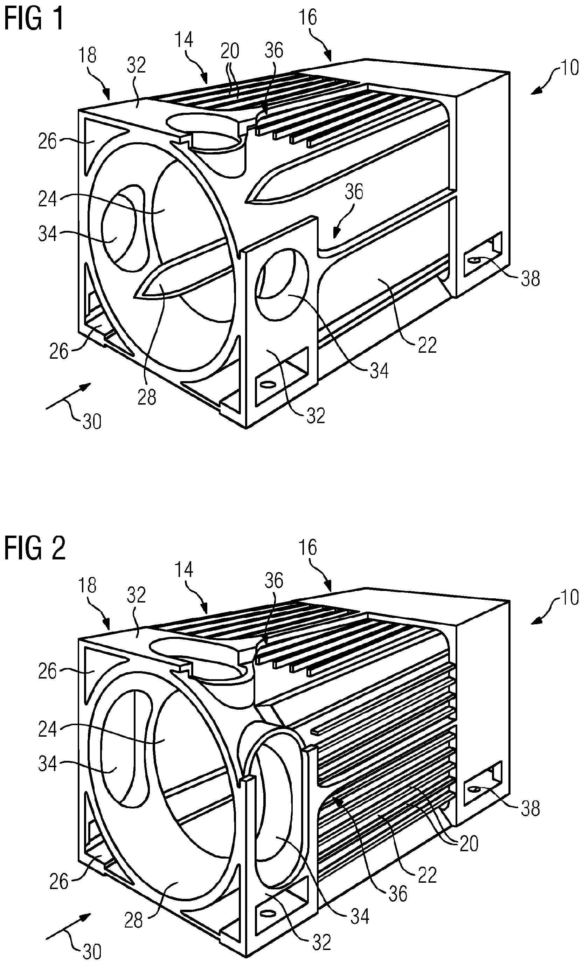

FIG 1 zeigt ein Gehäuse 10 für eine elektrische Maschine 12 in einer Perspektivansicht. Das Gehäuse 10 der elektrischen Maschine 12 ist in drei Bereiche 14, 16 und 18 unterteilt. In einem Kühlbereich 14, der dem mittleren Bereich des Gehäuses 10 entspricht, umfasst das Gehäuse eine Mehrzahl von Kühlrippen 20, die vorliegend nur im oberen Bereich des Gehäuses 10 dargestellt sind. Die Kühlrippen 20 sind an einer Außenfläche einer Gehäusewand 22 angeordnet. Die Gehäusewand 22 weist im Wesentlichen die Form eines Hohlzylinders auf. Das Gehäuse 10 kann beispielsweise aus Grauguss oder Stahl gefertigt sein. Dadurch, dass das Gehäuse 10 im Inneren 24 im Wesentlichen einen runden Querschnitt aufweist, kann das Gehäuse 10 mittels einer drehenden Bearbeitung gefertigt sein.

Des Weiteren weist das Gehäuse 10 einen Kühlmittelzufuhrbereich 16 auf, der sich an den Kühlbereich 14 anschließt. Der Kühlmittelzufuhrbereich 16 weist einen rechteckigen bzw. quadratischen Querschnitt auf. In dem Kühlmittelzufuhrbereich 16 ist zumindest ein Kanal, der der Zufuhr eines Kühlmittelstroms zu den Kühlrippen 20 im Kühlbereich 14 des Gehäuses 10 dient. Des Weiteren umfasst das Gehäuse 10 einen Kühlmittelabfuhrbereich 18, der ebenfalls einen rechteckigen bzw. quadratischen Querschnitt aufweist. In dem Kühlmittelabfuhrbereich 18 ist zumindest ein Kanal, der der Abfuhr des Kühlmittelstroms von den Kühlrippen 20 im Kühlmittelbereich 14 dient, vorgesehen. In dem vorliegenden Ausführungsbeispiel umfasst der Kühlmittelabfuhrbereich 18 vier Kanäle 26, von denen drei dargestellt sind. Die Kanäle 26 sind jeweils in den Ecken des Gehäuses im Kühlmittelabfuhrbereich 18 angeordnet. Im Inneren 24 des Gehäuses 10 sind entsprechende Aussparungen 28 angeordnet, die sich entlang einer axialen Richtung 30 des Gehäuses erstrecken. Die Aussparungen 28 dienen zum Führen eines Kühlmittelstroms im Inneren des Gehäuses 10.

Zudem umfasst das Gehäuse 10 im Kühlmittelabfuhrbereich 18 an den Außenflächen jeweilige Befestigungsflächen 32. Die Befestigungsflächen 32 dienen zur Montage von Klemmkästen. Zudem können an den Befestigungsflächen 32 Hilfsklemmkästen oder Monitoringgeräte angeordnet werden. In dem Bereich der Befestigungsflächen 32 sind jeweils Durchgangsöffnungen 34 vorgesehen. Die Durchgangsöffnungen 34 dienen der Durchführung von elektrischen Leitungen. Beispielsweise können durch die Durchgangsöffnungen 34 elektrische Leitungen zur elektrischen Kontaktierung des Stators mit einem Klemmkasten geführt werden. Das Gehäuse 10 weist im Kühlbereich 14 entsprechende Kühlmittelablenkelemente 36 auf. Die Kühlmittelablenkelemente 36 sind in dem Bereich des Kühlbereichs 14 angeordnet, der den Befestigungsflächen 32 im Kühlmittelabfuhrbereich 18 zugeordnet ist. Dadurch kann erreicht werden, dass der Kühlmittelstrom um die Befestigungsflächen 32 bzw. die Durchgangsöffnung 34 herum in die Kanäle 26 des Kühlmittelabfuhrbereichs 18 geleitet wird. Des Weiteren umfasst das Gehäuse 10 entsprechende Aussparungen 38 zum Anbringen von Füßen für das Gehäuse 10.

FIG 2 zeigt eine weitere Ausführung des Gehäuses 10 für eine elektrische Maschine 12 in einer Perspektivansicht. Dabei weisen die Durchgangsöffnungen 34 in den Befestigungsflächen 32 im Vergleich zu denen in der Ausführungsform gemäß FIG 1 einen elliptischen Querschnitt auf.

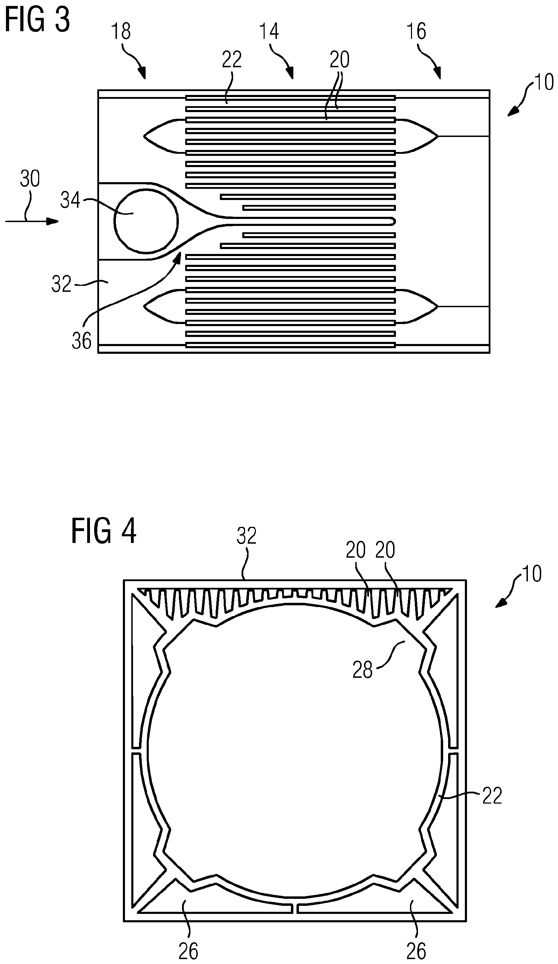

FIG 3 zeigt das Gehäuse 10 gemäß FIG 1 in einer abgewickelten Darstellung. Dabei ist zu erkennen, dass sich die Kühlrippen 20 entlang der axialen Richtung 30 erstrecken. Die Kühlrippen 20 sind über den kompletten Umfang des Gehäuses 10 in dem Kühlbereich 14 angeordnet. Dabei ist eine der Kühlrippen 20 mit dem Kühlmittelablenkelement 36 einteilig ausgebildet. Mit anderen Worten ist eine der Kühlrippen 20 als Steg ausgebildet, der sich in Richtung zur Durchgangsöffnung 34 hin verbreitert. Des Weiteren weisen die Kühlrippen 20 in dem der Durchgangsöffnung 34 zugeordneten Bereich in axialer Richtung eine geringere Erstreckung auf.

FIG 4 zeigt das Gehäuse 10 in einer geschnittenen Seitenansicht. Dabei ist zu erkennen, dass die Kühlrippen 20 an dem Randbereich länger sind als in einem mittleren Bereich, sodass sich insgesamt eine quaderförmige Außenfläche des Gehäuses 10 im Kühlbereich 14 ergibt. Des Weiteren sind in dieser Darstellung die Aussparungen 28 zu erkennen, die der Führung eines Kühlmittelstroms im Innenraum 24 des Gehäuses 10 dienen.

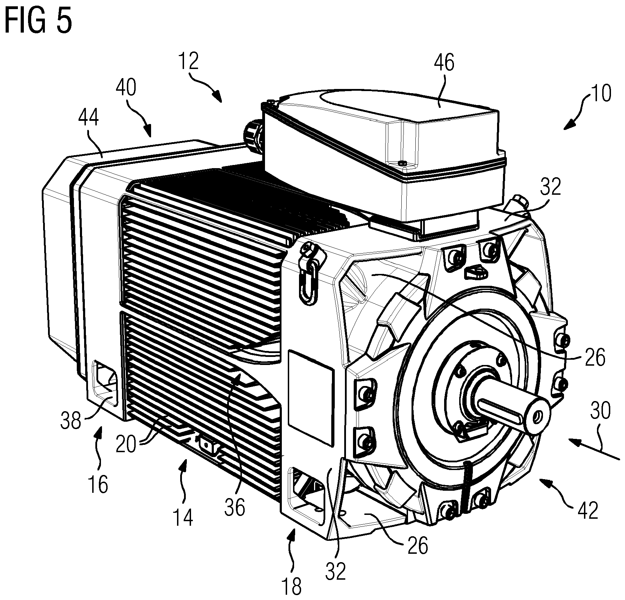

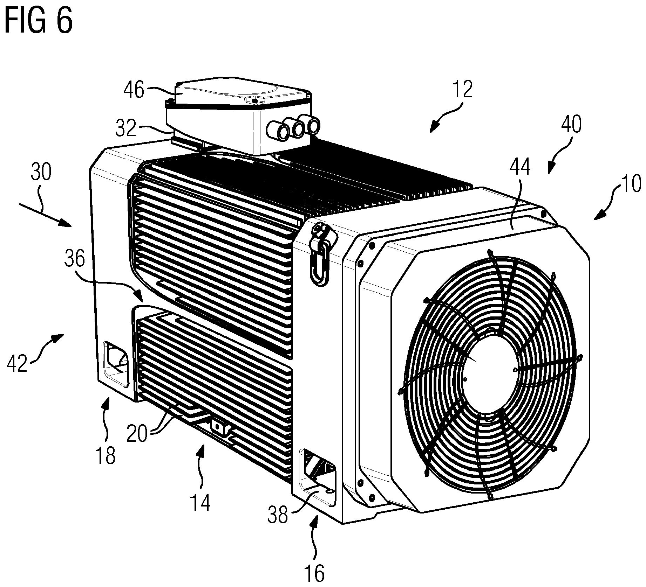

FIG 5 zeigt als Beispiel eine elektrische Maschine mit dem Gehäuse 10. Dabei ist der Kühlmittelzufuhrbereich 16 einer Nichtantriebsseite 40 der elektrischen Maschine 12 und der Kühlmittelabfuhrbereich 18 einer Antriebsseite 42 der elektrischen Maschine 12 zugeordnet. An dem Kühlmittelzufuhrbereich 16 des Gehäuses 10 ist ein Lüfter 44 angeordnet, der von einer Lüfterhaube umgeben ist. Mit dem Lüfter 44 wird ein Luftstrom erzeugt, der durch die hier nicht dargestellten Kanäle im Kühlmittelzufuhrbereich 16 über die Kühlrippen 20 im Kühlbereich 14 zu den Kanälen 26 im Kühlmittelabfuhrbereich 18 geleitet wird. An einer oberen Befestigungsfläche 32 ist ein Klemmkasten 46 angeordnet. FIG 6 zeigt die elektrische Maschine 12 gemäß FIG 5 in einer weiteren Perspektivansicht.

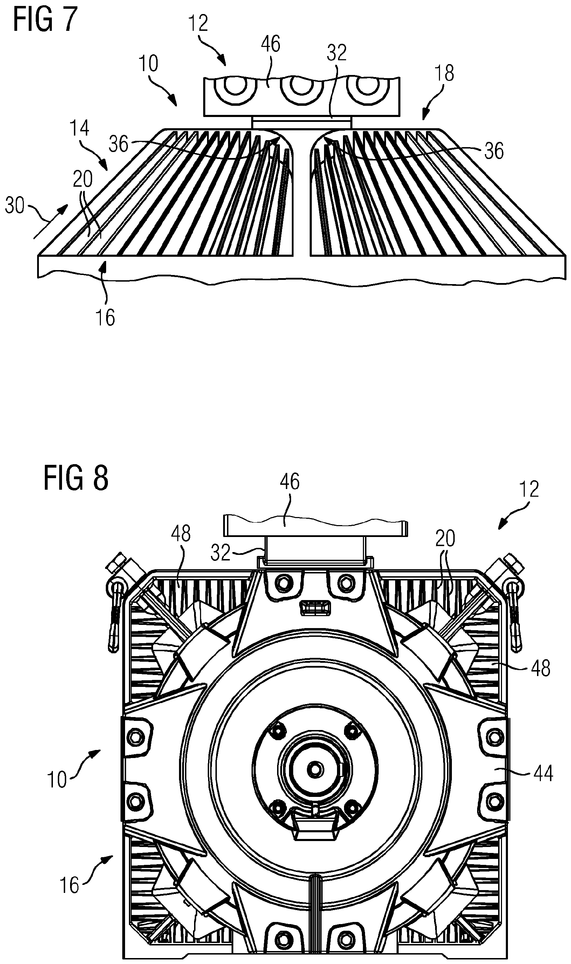

FIG 7 zeigt als Beispiel eine weitere Perspektivansicht der elektrischen Maschine 12. Durch die Darstellung gemäß FIG 7 wird die Anordnung der Kühlrippen 20, die sich in axialer Richtung 30 erstrecken verdeutlicht. Zudem ist der Kühlmittelablenkbereich 36 zu erkennen, der den Kühlmittelstrom um den Bereich der Befestigungsfläche 32 herum lenkt.

FIG 8 zeigt als Beispiel eine Seitenansicht der elektrischen Maschine 12. In der Darstellung gemäß FIG 8 ist das Lüftergehäuse des Lüfters 44 abgenommen. In dieser Darstellung sind die Kanäle 48, die der Zufuhr des Kühlmittelstroms, der von dem Lüfter 44 erzeugt wird, zu den Kühlrippen 20 dargestellt. Die Kanäle 48 sind im vorliegenden Ausführungsbeispiel analog zu den Kanälen in dem Kühlmittelabfuhrbereich 18 ausgebildet.

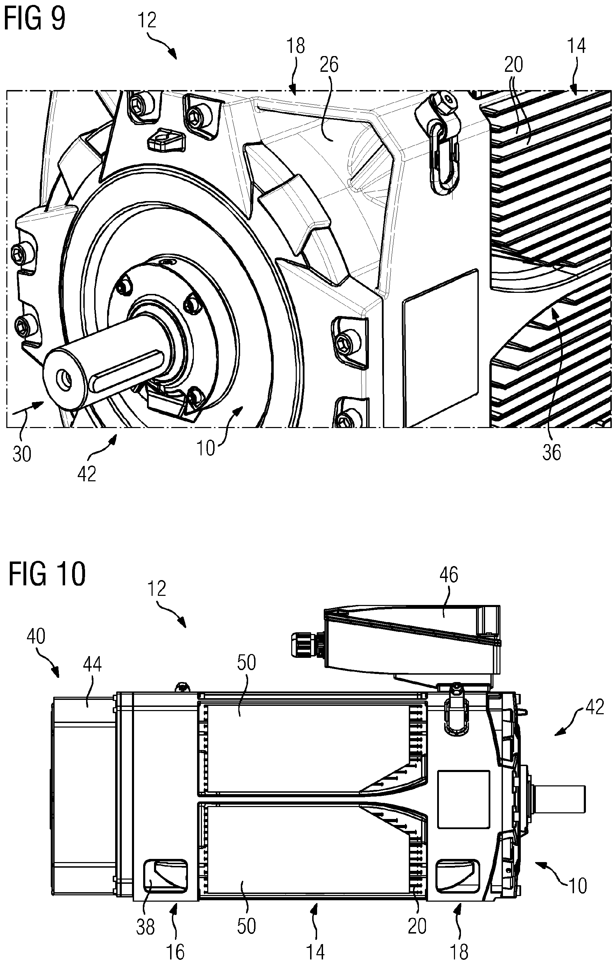

FIG 9 zeigt als Beispiel eine weitere Perspektivdarstellung der elektrischen Maschine 12 mit einer Detailansicht der Kanäle 26 im Kühlmittelabfuhrbereich 18.

FIG 10 zeigt als Beispiel die elektrische Maschine 12 in einer Seitenansicht. Dabei sind zusätzlich an den Außenflächen der Kühlrippen 20 Luftleitbleche 50 angeordnet, die die Führung des Kühlmittelstroms entlang der Kühlrippen 20 verbessern.

Bei der elektrischen Maschine 12 kann sowohl ein Eigenlüfter als auch ein Fremdlüfter verwendet werden. Dabei kann auch ein Lüfter 44 verwendet werden, mit dem sowohl Außenkühlmittelstrom, der über die Kühlrippen 20 geführt wird, als auch ein Innenkühlmittelstrom, der durch die Aussparungen 28 geführt wird, bereitgestellt werden. Alternativ dazu kann ein Lüfter für den Außenkühlmittelstrom und ein Lüfter für den Innenkühlmittelstrom bereitgestellt werden. Zur Führung des von dem Lüfter 44 bereitgestellten Luftstroms können beispielsweise auf der Nichtantriebsseite 42 der elektrischen Maschine 12 entsprechende Lagerschilde verwendet werden. Durch das quaderförmige Design des Gehäuses 10 kann eine deutlich vergrößerte Kühloberfläche für die elektrische Maschine 12 bereitgestellt werden. Dadurch kann die Verlustwärme, die von der elektrischen Maschine 12 erzeugt wird, besser abgeführt werden. Zusätzlich kann die Kühlleistung durch die gezielte Luftführung mittels der Kanäle 26 und 48 verbessert werden. Durch das Kühlablenkelement 36 wird der Luftstrom nicht mehr durch den Klemmkastensockel beeinflusst. Mit dem Gehäuse 10 kann die ErP-Richtlinie durch die Kombination des neuen Gehäusekonzepts und eines Radiallüfters umgesetzt werden, da der Motor für den Radiallüfter nicht mehr im Lufteintrittsbereich angebracht werden muss.

Zudem kann mit dem Gehäuse 10 ein optimierter Innenkühlkreislauf mittels der Aussparungen 28 in dem Gehäuse 10 ermöglich werden. Zusätzlich wird durch die Anordnung der Durchtrittsöffnungen 34 der Luftstrom in dem Innenkühlkreislauf nicht mehr beeinflusst. Durch die Befestigungsflächen 32 werden verschiedene Möglichkeiten der Anbringung von Klemmkästen, Hilfsklemmkästen oder Monitoringgeräten an den Seitenflächen des Gehäuses 10 ermöglicht. Des Weiteren wird ein einfaches Reinigungskonzept ermöglicht, da die Kühlrippen 20 frei zugänglich sind.

## Patentansprüche

1. Gehäuse (10) für eine elektrische Maschine (12) mit
- einem Kühlbereich (14), in dem eine Mehrzahl von Kühlrippen (20) zum Führen eines Kühlmittelstroms an einer Außenfläche einer Gehäusewand (22) angeordnet ist,
- einem Kühlmittelzufuhrbereich (16), der sich an einer ersten Seite des Kühlbereichs (14) an den Kühlbereich (14) anschließt und der zumindest einen Kanal (26) zum Zuführen des Kühlmittelstroms zu den Kühlrippen (20) des Kühlbereichs (14) aufweist und
- einem Kühlmittelabfuhrbereich (18), der sich an einer der ersten Seite gegenüberliegenden, zweiten Seite des Kühlbereichs (14) an den Kühlbereich (14) anschließt und der zumindest einen Kanal (26) zum Abführen des Kühlmittelstroms von den Kühlrippen (20) des Kühlbereichs (14) aufweist, wobei
- in dem Innenraum (24) des Gehäuses (10) zumindest eine Aussparung (28) zum Führen eines Kühlmittelstroms im Inneren des Gehäuses (10) angeordnet ist, wobei
- sich die zumindest eine Aussparung (28) entlang einer axialen Richtung (30) des Gehäuses (10) erstreckt und wobei
- die zumindest eine Aussparung (28) in die Gehäusewand eingebracht ist und zum Führen eines Innenkühlkreislaufes dient,
**dadurch gekennzeichnet, dass**
- das Gehäuse (10) im Kühlmittelzufuhrbereich (16) einen rechteckigen Querschnitt aufweist, wobei in dem Innenraum (24) des Gehäuses (10) im Kühlmittelzufuhrbereich (16) in den Ecken jeweils ein Kanal (26) zum Zuführen des Kühlmittelstroms angeordnet ist, wobei der jeweilige Kanal ( 26) den Kühlmittelstrom zu den Kühlrippen (20) in dem Kühlbereich (14) des Gehäuses führt,
- das Gehäuse (10) im Kühlmittelabfuhrbereich (18) einen rechteckigen Querschnitt aufweist, wobei in dem Innenraum (24) des Gehäuses (10) im Kühlmittelabfuhrbereich (18) in den Ecken jeweils ein Kanal (26) zum Abführen des Kühlmittelstroms angeordnet ist und
- der rechteckige Querschnitt in dem Kühlmittelzufuhrbereich (16) und in dem Kühlmittelabfuhrbereich (18) die gleichen Außenmaße wie das Gehäuse (10) in dem Kühlbereich (14) aufweist.

2. Gehäuse (10) nach Anspruch 1,
**dadurch gekennzeichnet, dass** die Kühlrippen (20) im Kühlbereich (14) entlang eines kompletten Umfangs der Außenfläche der Gehäusewand (22) angeordnet sind.

3. Gehäuse (10) nach einem der vorhergehenden Ansprüche,
**dadurch gekennzeichnet, dass** das Gehäuse (10) im Kühlmittelabfuhrbereich (18) zumindest eine Durchgangsöffnung (34) aufweist.

4. Gehäuse (10) nach einem der vorhergehenden Ansprüche,
**dadurch gekennzeichnet, dass** das Gehäuse (10) im Kühlmittelabfuhrbereich (18) zumindest eine Befestigungsfläche (32) aufweist.

5. Gehäuse (10) nach Anspruch 4,
**dadurch gekennzeichnet, dass** in einem der Befestigungsfläche (32) im Kühlmittelabfuhrbereich (18) zugeordneten Bereich im Kühlbereich (14) ein Kühlmittelablenkelement (36) angeordnet ist.

6. Gehäuse (10) nach einem der vorhergehenden Ansprüche,
**dadurch gekennzeichnet, dass** auf einer der Gehäusewand (22) gegenüberliegenden Seite der Kühlrippen (20) auf den Kühlrippen (20) zumindest ein Luftleitblech (50) angeordnet ist.

7. Elektrische Maschine (12) mit einem Gehäuse (10) nach einem der vorhergehenden Ansprüche, wobei der Kühlmittelzufuhrbereich (16) des Gehäuses (10) einer Nichtantriebsseite (40) der elektrischen Maschine (12) und der Kühlmittelabfuhrbereich (18) des Gehäuses (10) einer Antriebsseite (42) der elektrischen Maschine (12) zugeordnet ist.

8. Elektrische Maschine (12) nach Anspruch 7,
**dadurch gekennzeichnet, dass** die elektrische Maschine (12) einen Lüfter (44) umfasst, der an dem Gehäuse (10) an einer dem Kühlbereich (14) gegenüberliegenden Seite des Kühlmittelzufuhrbereichs (16) angeordnet ist.

## Claims

1. Housing (10) for an electrical machine (12) having
- a cooling region (14), in which a plurality of cooling fins (20) for guiding a coolant flow are arranged on an outer face of a housing wall (22),
- a coolant supply region (16) which adjoins the cooling region (14) on a first side of the cooling region (14) and which has at least one duct (26) for supplying the coolant flow to the cooling fins (20) of the cooling region (14) and
- a coolant discharge region (18) which adjoins the cooling region (14) on a second side of the cooling region (14) opposite the first side and which has at least one duct (26) for discharging the coolant flow from the cooling fins (20) of the cooling region (14), wherein
- at least one recess (28) is arranged in the interior space (24) of the housing (10) for guiding a coolant flow inside the housing (10), wherein
- the at least one recess (28) extends in an axial direction (30) along the housing (10) and wherein
- the at least one recess (28) is introduced into the housing wall and serves to guide an interior cooling circuit, **characterised in that**
- the housing (10) in the coolant supply region (16) has a rectangular cross-section, wherein in the interior space (24) of the housing (10) in the coolant supply region (16) a duct (26) for supplying the coolant flow is arranged in each of the corners, wherein the respective duct (26) guides the coolant flow to the cooling fins (20) in the cooling region (14) of the housing,
- the housing (10) in the coolant discharge region (18) has a rectangular cross-section, wherein in the interior space (24) of the housing (10) in the coolant discharge region (18) a duct (26) for discharging the coolant flow is arranged in each of the corners and
- the rectangular cross-section in the coolant supply region (16) and in the coolant discharge region (18) has the same external dimensions as the housing (10) in the cooling region (14) .

2. Housing (10) according to claim 1,
**characterised in that** the cooling fins (20) in the cooling region (14) are arranged along a complete circumference of the outer face of the housing wall (22).

3. Housing (10) according to one of the preceding claims,
**characterised in that** the housing (10) in the coolant discharge region (18) has at least one opening (34) .

4. Housing (10) according to one of the preceding claims,
**characterised in that** the housing (10) in the coolant discharge region (18) has at least one mounting face (32).

5. Housing (10) according to claim 4,
**characterised in that** in the cooling region (14) a cooling baffle (36) is arranged in a region assigned to the mounting face (32) in the coolant discharge region (18).

6. Housing (10) according to one of the preceding claims,
**characterised in that** at least one air baffle (50) is arranged on the cooling fins (20) on a side of the cooling fins (20) opposite the housing wall (22).

7. Electrical machine (12) with a housing (10) according to one of the preceding claims, wherein the coolant supply region (16) of the housing (10) is assigned to a non-drive side (40) of the electrical machine (12) and the coolant discharge region (18) of the housing (10) to a drive side (42) of the electrical machine (12).

8. Electrical machine (12) according to claim 7,
**characterised in that** the electrical machine (12) comprises a fan (44) which is arranged on the housing (10) on a side of the coolant supply region (16) opposite the cooling region (14).

## Revendications

1. Enveloppe (10) d'une machine (12) électrique comprenant
- une partie (14) de refroidissement, dans laquelle est disposée une pluralité d'ailettes (20) de refroidissement pour conduire un courant de fluide de refroidissement sur une surface extérieure d'une paroi (22) de l'enveloppe,
- une partie (16) d'apport de fluide de refroidissement, qui se raccorde à la partie (14) de refroidissement sur un premier côté de la partie (14) de refroidissement et qui a au moins un conduit (26) pour apporter le courant de fluide de refroidissement aux ailettes (20) de refroidissement de la partie (14) de refroidissement et
- une partie (18) d'évacuation du fluide de refroidissement, qui se raccorde à la partie (14) de refroidissement sur un deuxième côté, opposé au premier côté, de la partie (14) de refroidissement et qui a au moins un conduit (26) pour évacuer le courant de fluide de refroidissement des ailettes (20) de refroidissement de la partie (14) de refroidissement, dans laquelle
- dans l'espace (24) intérieur de l'enveloppe (10) est disposé au moins un évidemment (28) pour conduire un courant de fluide de refroidissement à l'intérieur de l'enveloppe (10),
dans laquelle
- le au moins un évidement (28) s'étend suivant une direction (30) axiale de l'enveloppe (10) et dans laquelle
- le au moins un évidement (28) est ménagé dans la paroi de l'enveloppe et sert à conduire un circuit de refroidissement intérieur,
**caractérisée en ce que**
- l'enveloppe (10) a une section transversale rectangulaire dans la partie (16) d'apport du fluide de refroidissement, dans laquelle, dans l'espace (24) intérieur de l'enveloppe (10), dans la partie (16) d'apport du fluide de refroidissement, est disposé dans les coins, respectivement, un conduit (26) d'apport du courant de fluide de refroidissement, le conduit (26) respectif conduisant le courant de fluide de refroidissement aux ailettes (20) de refroidissement de la partie (14) de refroidissement de l'enveloppe,
- l'enveloppe (10) a une section transversale rectangulaire dans la partie (18) d'évacuation du fluide de refroidissement dans laquelle, dans l'espace (24) intérieure de l'enveloppe (10), dans la partie (18) d'évacuation du fluide de refroidissement, est disposé, dans les coins, respectivement, un conduit (26) pour évacuer le courant du fluide de refroidissement et
- la section transversale rectangulaire, dans la partie (16) d'apport de fluide de refroidissement et dans la partie (18) d'évacuation du fluide de refroidissement, a les mêmes dimensions extérieures que l'enveloppe (10) dans la partie (14) de refroidissement.

2. Enveloppe (10) suivant la revendication 1,
**caractérisée en ce que**
les ailettes (20) de refroidissement de la partie (14) de refroidissement sont disposées suivant un pourtour complet de la surface extérieure de la paroi (22) de l'enveloppe.

3. Enveloppe (10) suivant l'une des revendications précédentes,
**caractérisée en ce que**
l'enveloppe (10) a au moins une ouverture (34) de passage dans la partie (18) d'évacuation du fluide de refroidissement.

4. Enveloppe (10) suivant l'une des revendications précédentes,
**caractérisée en ce que**
l'enveloppe (10) a au moins une surface (32) de fixation dans la partie (18) d'évacuation du fluide de refroidissement.

5. Enveloppe (10) suivant la revendication 4,
**caractérisée en ce qu'**
un élément (36) de déviation du fluide de refroidissement est disposé dans une région, associée à la surface (32) de fixation de la partie (18) d'évacuation du fluide de refroidissement, de la partie (14) de refroidissement.

6. Enveloppe (10) suivant l'une des revendications précédentes,
**caractérisée en ce qu'**
au moins une tôle (50) de déviation de l'air est mise sur les ailettes (20) de refroidissement d'un côté, opposé à la paroi (22) de l'enveloppe, des ailettes (20) de refroidissement.

7. Machine (12) électrique ayant une enveloppe (10) suivant l'une des revendications précédentes, la partie (16) d'apport du fluide de refroidissement de l'enveloppe (10) étant associée à un côté (40) de non entraînement de la machine (12) électrique et la partie (18) d'évacuation du fluide de refroidissement de l'enveloppe (10) étant associée à un côté (42) d'entraînement de la machine (12) électrique.

8. Machine (12) électrique suivant la revendication 7, **caractérisée en ce que**
la machine (12) électrique comprend un ventilateur (44), qui est disposé sur l'enveloppe (10) d'un côté, opposé à la partie (14) de refroidissement, de la partie (16) d'apport du fluide de refroidissement.
